# EUROPÄISCHE PATENTSCHRIFT

(11) **EP 0 704 011 B1**
(45) Veröffentlichungstag und Bekanntmachung des Hinweises auf die Patenterteilung: **08.09.1999**
(21) Anmeldenummer: 95915154.9
(22) Anmeldetag: 24.03.1995
(51) Int. Cl.: E04B 1/26

(54) **HOLZVERBINDUNGSSYSTEM UND HOLZVERBINDUNGSELEMENT**
SYSTEM AND ELEMENT FOR JOINING WOODEN MEMBERS
SYSTEME ET ELEMENT DE LIAISON DE PIECES EN BOIS

(30) Priorität: 26.03.1994 DE 4410535; 26.03.1994 DE 4410534
(43) Veröffentlichungstag der Anmeldung: 03.04.1996
(73) Patentinhaber: KERL HOLZBAU GMBH, 74676 Niedernhall (DE)
(72) Erfinder: THOSS, Werner, D-72202 Nagold (DE)
(74) Vertreter: Klocke, Peter, Dipl.-Ing.
(86) Internationale Anmeldenummer: EP9501112
(87) Internationale Veröffentlichungsnummer: WO9526446

(56) Entgegenhaltungen:
- WO-A-87/03634
- DE-U- 9 310 494
- FR-A- 2 105 002
- GB-A- 2 005 325
- US-A- 2 668 995
- US-A- 4 229 919

## Beschreibung

Die vorliegende Erfindung betrifft ein Holzverbindungssystem für Holzbauten, wie Pergolen, offene Garagen, Haltestellen und dergleichen sowie ein Holzverbindungselement zur Verbindung von vertikalen Pfosten und im wesentlichen senkrecht dazu befestigten Holzbalken.

Häufig wird bei Zäunen, Pergolen, offenen Garagen und dergleichen Rundholz, aber auch Beton, als Pfosten verwendet, an dem dann Holzbalken als Träger eines Zaunfeldes oder einer Seitenwand, beispielsweise für eine Garage, befestigt wird. Die Verbindung zwischen dem Pfosten und dem Holzbalken erfolgt dabei in üblicher Weise mit mechanischen Teilen, wie Scharniere, Schraubverbindungen, Winkel und dergleichen. Alle diese Elemente haben den Nachteil, daß sie einerseits das Holz des Pfostens beschädigen, die Montage aufwendig ist, eine flexible Anpassung an die unterschiedlichsten Formen und eine leichte Demontage und Veränderung nicht möglich ist.

Die Verbindung der einzelnen Holzbauteile der oben angegebenen Holzbauten erfolgt üblicherweise mittels Winkel, Schraubverbindungen oder konstruktiven Auskerbungen in den einzelnen Bauteilen. Bei diesen Holzbauten handelt es sich im wesentlichen um die Verbindung von senkrechten Stützen, die häufig aus Rundholz aber auch aus Beton ausgebildet sind, und senkrecht dazu angeordneten im wesentlichen waagerechten Bauteile, die als Hauptträger bezeichnet werden. Auf diesen Hauptträgern können noch sogenannte Nebenträger angeordnet sein. Nachteilig bei den bisher bekannten Befestigungsarten ist, daß es bei ihnen einerseits an konstruktivem Holzschutz mangelt, da die Holzteile beschädigt werden oder Flächen im Holz entstehen, auf denen sich Wasser sammelt, das dann zur frühzeitigen Zerstörung des Holzes führt, und andererseits eine variable Bauform, die von dem rechtwinkligen Grundriß abweicht, nur aufwendig zu realisieren ist.

Aus der GB 2 005 325 A ist ein Verbindungselement aus Metall zur Verbindung von Metallzäunen bekannt, das ein an einer Seite offenes Ringband aufweist, dessen Innendurchmesser im wesentlichen dem Außendurchmesser des Pfostens entspricht. Zur Befestigung sind an den offenen Enden des Ringbandes Befestigungslaschen angeformt, zwischen denen ein Zaunelement befestigbar ist. Die Befestigungslaschen sind dabei breiter ausgebildet als das Ringband. Dadurch können an einem Pfosten zwei Verbindungselemente verwendet werden, die gegeneinander um 180° um ihre Längsachse gedreht sind. Das eine Verbindungselement zeigt in die eine und das andere Verbindungselement in die andere Richtung. Die beiden Verbindungselemente können dadurch dicht aneinander anliegend an dem Pfosten befestigt werden, ohne daß eine Verschiebung der einzelnen Zaunfelder in der Höhe erfolgt. Die Befestigungsmittel in den Befestigungslaschen sind bei einer Drehung um 180° um die Längsachse verdrehsymmetrisch angeordnet.

Die DE-U-9310495 offenbart einen Verbindungsknoten für im Kreuzverbund angeordnete C-Profilschienen, die nicht rechtwinkelig kreuzend zueinander angeordnet sind. Der Verbindungsknoten besteht dabei aus zwei identisch ausgebildeten Einzelteilen, die aus einem Mittelstück und den entgegengesetzten Seiten angeformten Laschen bestehen, wobei die Mittelstücke schwenkbar mit einander verbunden sind. Die Laschen der beiden vorhandenen Einzelteile sind entgegengesetzt zueinander abgebogen und werden in die Öffnung der sich kreuzenden C-Profilschienen eingeklippst. Die Mittelstücke der Einzelteile sind schwenkbar miteinander verbunden und erlauben damit die Anordnung von individuellen Kreuzungspunkten, die sich nicht rechtwinklig kreuzen.

Aus der DE 586 379 ist eine Vorrichtung zum Befestigen von Zaunriegeln bekannt, die U-förmig ausgestaltet ist und an der Basis drehbar an einem Befestigungselement zur Anbringung der Vorrichtung an einem Pfosten gelagert ist. Durch die drehbare Lagerung können beliebige Winkel relativ zu dem Pfosten auf einfache Weise realisiert werden.

Der vorliegenden Erfindung liegt die Aufgabe zugrunde, ein Holzbau-gerechtes Holzverbindungselement und Holzverbindungssystem vorzuschlagen, das eine einfache Montage und Veränderung erlaubt, wobei gleichzeitig die Beschädigung der einzelnen Holzbauteile möglichst gering gehalten wird.

Diese Aufgabe wird für ein Holzverbindungssystem durch die Merkmale des Hauptanspruchs gelöst. Das Holzverbindungssystem weist ein erstes Verbindungselement zwischen einem vertikalen Pfosten und einem horizontalen Holzbalken auf, das den Pfosten mittels einem oder mehreren Ringbändern ringförmig umgreift und über Befestigungslaschen an dem Holzbalken befestigbar ist. Der Pfosten kann dabei aus Holz oder anderen Materialien hergestellt und rund oder viereckig ausgebildet sein. Durch die Befestigung des Holzbalkens an den Befestigungslaschen und das Verkanten aufgrund der Last wird das erste Verbindungselement ohne weitere Befestigung an dem Pfosten an diesem gehalten. Das erste Verbindungselement weist zwei oder mehrere zueinander beabstandete und an einer Seite offene Ringbänder auf, deren Innendurchmesser im wesentlichen dem Außendurchmesser bzw. dem Umfangskreis eines eckigen Pfostens entspricht. An den offenen Enden der Ringbänder sind zwei Befestigungslaschen für den Holzbalken angeordnet, die breiter sind als die lichte Weite der Ringbänder, die sich aus dem Abstand der äußeren Kanten der beiden äußeren Ringbänder ergibt. Der Abstand der Ringbänder entspricht dabei mindestens der Breite der Ringbänder. Dabei können die Befestigungslaschen zur Halterung eines eckigen Holzbalkens eben ausgebildet oder mindestens teilweise gewölbt und an die runde Form eines entsprechenden Holzbalkens angepaßt sein. Die Befestigungsmittel in den Befestigungslaschen für den Holzbalken sind so plaziert, daß sie verdrehsymmetrisch zu einer Drehung um die Längsachse um 180° angeordnet sind. Durch die breiten Befestigungslaschen und die besondere Anordnung der Befestigungsmittel ist es möglich, durch Drehen um die Längsachse um 180° zwei an einem Pfosten zu befestigende Holzbalken in einer Höhe anzuordnen. Dabei greifen die Ringbänder der Verbindungselemente ineinander, so daß sie sich parallel zueinander in den Zwischenräumen zwischen den Ringbändern des anderen Verbindungselement befindend, den Pfosten umgreifen. Ein zweites Verbindungselement zwischen den im wesentlichen horizontal verlaufenden Holzbalken weist zwei U-förmig ausgebildete Halteteile auf, die an ihren geschlossenen Stirnseiten um die Längsachse drehbar gelagert miteinander verbunden sind. Durch diese beiden Verbindungselemente des Holzverbindungselements können die Grundrisse der Holzbauten auf einfache Weise variiert werden und dabei wesentlich von der rechtwinkligen Bauweise abweichen. Durch das erste Verbindungselement können zwei an einem Pfosten befestigte Holzbalken durch einfaches Verdrehen mit beliebigem Winkel zueinander eingestellt werden und durch das zweite Verbindungselement können auch die Haupt- und Nebenträger an die sich durch Befestigung am Pfosten ergebenden Winkel angepaßt werden.

Weitere vorteilhafte Ausgestaltungen des Holzverbindungssystems sind den diesbezüglichen Unteransprüchen zu entnehmen.

Gemäß einer bevorzugten Ausführungsform weisen die Befestigungslaschen einen Anschlag für den Holzbalken als Montagehilfe auf. Dieser Anschlag kann in Form eines Bolzen, der von den beiden Befestigungslaschen getragen wird, ausgeführt sein. Bei der Montage wird der zu befestigende Holzbalken, der dazu noch eine entsprechend geformte Ausnehmung aufweisen kann, bis an den Anschlag herangeführt, so daß die Bohrungen im Holzbalken leichter mit ensprechenden Bohrungen in den Befestigungslaschen in Übereinstimmung gebracht werden können.

Um die nicht belüftete Fläche am Holz möglichst gering zu halten, weist gemäß einer weiteren vorteilhaften Ausführungsform die Ringbandfläche und/oder die Haltelaschen Löcher für die Belüftung des Holzes auf.

Bei dem zweiten Verbindungselement erfolgt gemäß einer weiteren bevorzugten Ausführungsform die Verbindung der Halteteile über eine Welle, an denen die Halteteile um 360° drehbar befestigt sind. Dies erlaubt jeden beliebigen Winkel zwischen den einzelnen Holzbalken.

Zur Erzielung eines optimalen konstruktiven Holzschutzes können die Halteteile auch noch zusätzlich Löcher für die Belüftung des Holzes aufweisen. Gemäß einer bevorzugten Ausführungsform sind die Holzteile mit Abstand zu dem Halteteil angeordnet, so daß Feuchtigkeit ablaufen kann und sich keine Flächen bilden, auf denen sich Wasser ansammelt und die dann zum vorzeitigen Verfaulen des Holzes führen.

Mit dem erfindungsgemäß ausgestalteten Holzverbindungssystem ist es somit möglich, Holzbauten, wie sie im Bereich des Gartenbaus, vielfach auch von den Heimwerkern realisiert werden, aufzubauen, die von der rechteckigen Grundrißform abweichen. Die Verbindungselemente sind einfach zu montieren und zu demontieren, was auch die Verwendung dieses Systems bei Nichtfachleuten begünstigt. Da insbesondere die Pfosten nicht beschädigt werden, ist ein erneuter Einsatz mit einer anderen Gestaltungs- und Grundrißform ohne weiteres möglich.

Das erfindungsgemäß durch die Merkmale des auf das Holzverbindungselement gerichteten Anspruchs beschriebene Holzverbindungselement entspricht im wesentlichen dem ersten Verbindungselement des Holzverbindungssystems.

Zusätzlich ist in den Befestigungslaschen ein Anschlag für den Holzbalken als Montagehilfe vorgesehen, der als Schraubbolzen ausgebildet ist. Zusätzlich kann der Holzbalken an seiner Stirnseite noch eine Einkerbung aufweisen, mit der er den Rundbolzen umgreift. Bei der Montage wird der Holzbalken bis zu dem Anschlag zwischen die Befestigungslaschen bewegt, so daß automatisch die in dem Holzbalken vorgesehenen Bohrungen mit den Bohrungen in den Befestigungslaschen zur Übereinstimmung gebracht werden können.

Weitere vorteilhafte Ausgestaltungen des Holzverbindungselements sind den diesbezüglichen Unteransprüchen zu entnehmen.

Die Abmessungen des Ringbanddurchmessers in Bezug auf den verwendeten Pfosten und der Abstand der Befestigungslaschen zueinander in Bezug auf den zu haltenden Holzbalken kann dabei so gewählt werden, daß mit dem Verspannen des Holzbalkens auch gleichzeitig ein zusätzliches Verspannen des Ringbandes bzw. der Ringbänder um den Pfosten bewirkt wird. Grundsätzlich kann der Pfosten rund oder auch eckig ausgebildet sein. Gemäß einer bevorzugten Ausführungsform weisen jedoch die Befestigungslaschen einen Abstand auf, der der Dicke des Holzbalkens entspricht. Damit wird das jeweilige Ringband nicht um den Pfosten festgezogen sondern die Befestigung erfolgt dadurch, daß durch die Last des Holzbalkens das Ringband verkantet und damit eine Bewegung des Holzverbindungselements entlang des Pfostens ausgeschlossen ist. Dies umsomehr, wenn, wie über einem Zaun rechts und links des Pfostens Holzbalken angeordnet sind und daher zwei Holzverbindungselemente dicht aneinanderliegen.

Vorzugsweise sind die Befestigungslaschen im wesentlichen rechteckförmig ausgebildet, wobei eine Kante mit einer Kante des Ringbandes bzw. des äußeren Ringbandes fluchtet.

Dadurch wird mit geringstem Materialaufwand ein sicher wirkendes Holzverbindungselement realisiert. Zusätzlich weist die Ringbandfläche und/oder die Haltelaschen Löcher für die Belüftung des Holzes auf, damit sich hinter dem Holzverbindungselement möglichst wenig Wasser bildet, das zu Beschädigung des Holzes führen kann.

Wie bereits vorstehend angedeutet ist es mit dem erfindungsgemäß ausgestalteten Holzverbindungselement möglich, auf einfache Weise bestehende Holzverbindungen zu entfernen und zu ändern, ohne daß dabei Rücksicht genommen werden muß, in welchem Winkel die einzelnen Kanthölzer zueinander an einem Pfosten befestigt werden. Das Holzverbindungselement erlaubt eine völlig flexible Ausgestaltung, wobei gleichzeitig noch konstruktiver Holzschutz dadurch betrieben wird, daß möglichst wenig Holzteile ausgekerbt, angebohrt oder dergleichen verändert werden müssen.

Nachfolgend wird die Erfindung anhand von Ausführungsbeispielen in Verbindung mit den begleitenden Zeichnungen näher erläutert.

Es stellen dar:
- Figur 1: eine Draufsicht auf ein erstes Verbindungselement;
- Figur 2: eine Seitenansicht von zwei ersten Verbindungselementen, die zwei Holzbalken an einem Pfosten befestigen;
- Figur 3: eine Seitenansicht von einem zweiten Verbindungselement, das drei Kreuzbalken miteinander verbindet; und
- Figur 4: eine schematische Darstellung des Holzbaus mit den den Verbindungselementen.

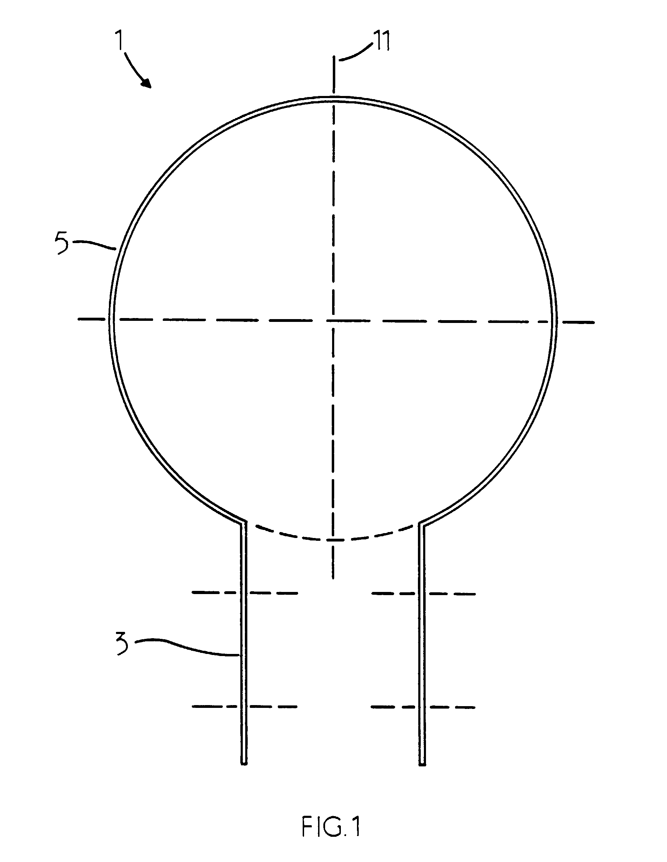

Figur 1 zeigt die Draufsicht auf ein erstes Holzverbindungselement 1 mit einem Ringband 5, an dessen offenen Enden sich zwei Befestigungslaschen 3 anschließen, die zur Befestigung eines Holzbalkens dienen. Das Ringband 5 umgreift einen Pfosten, der sowohl rund als auch eckig ausgebildet sein kann.

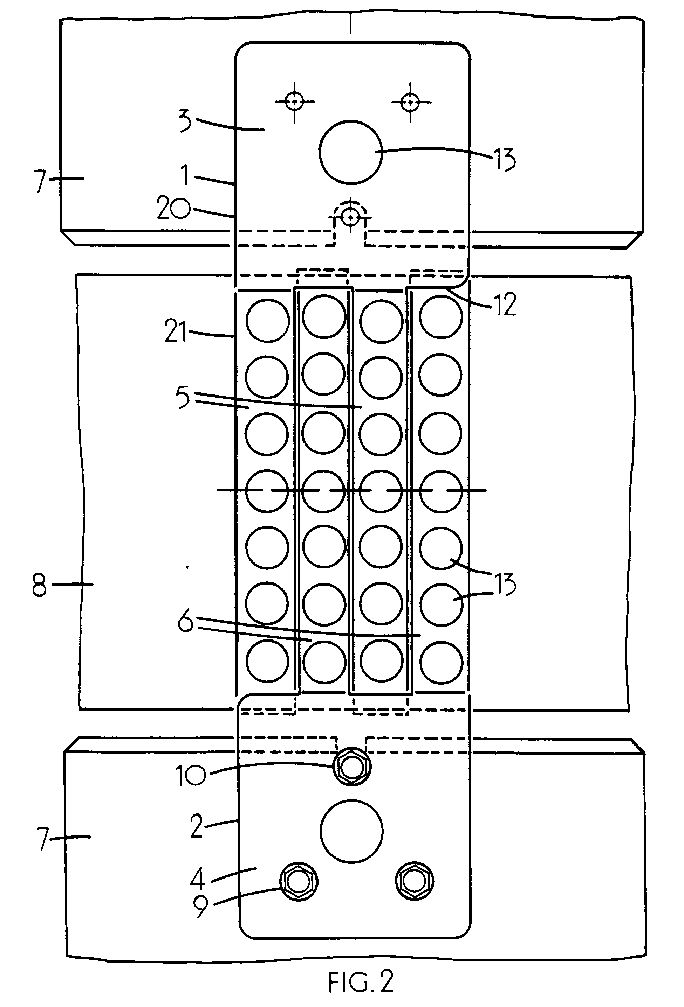

In Figur 2 sind zwei erste Holzverbindungselemente 1 und 2 dargestellt, an deren Befestigungslaschen 3 bzw. 4 jeweils ein Holzbalken 7 befestigt ist. Jedes Holzverbindungselement 1 und 2 weist zwei Ringbänder 5 bzw. 6 auf, die den senkrechten Pfosten 8 umgreifen. Die Ringbänder 5 bzw. 6 eines Holzverbindungselements sind mit Abstand zueinander angeordnet, wobei der Abstand mindestens der Breite des Ringbandes entspricht. Dadurch ist die platzsparende Anordnung zweier Holzverbindungselemente, wie in der Figur gezeigt, möglich. Gleichzeitig sind die Befestigungslaschen 3 bzw. 4 so ausgebildet, daß sie breiter sind, als der Abstand von den beiden äußeren Kanten der Ringbänder 5 bzw. 6. Dadurch können die Befestigungsmittel 9, beispielsweise verschraubte Bolzen oder dergleichen, so angeordnet werden, daß sie eine Drehung des Holzverbindungselements um seine Längsachse 11 um 180° erlauben, ohne daß die Lage der Befestigungspunkte sich verändert. Damit können zwei Holbalken 7 von einem Pfosten 8 in gleicher Höhe angebracht werden, ohne daß eine Versetzung beispielsweise der Bohrlöcher in dem Holzbalken erforderlich ist. Mittels eines Anschlagbolzens 10, wird die Montage wesentlich vereinfacht, da der Holzbalken 7 bis an den Anschlag 10 bewegt wird und dann leichter die Befestigungsmittel 9 durch die zugehörigen Bohrungen an dem Holzbalken 7 angebracht werden können. Die Kante 12 an den Befestigungslaschen 3 bzw. 4 dient zusätzlich noch als Anschlag beim Verkanten des jeweiligen Holzverbindungselements am Pfosten 8 aufgrund der Last durch den Holzbalken 7. Damit ist ein Verrutschen des jeweiliegen Holzverbindungselements 1 bzw. 2 sicher verhindert. Die Ringbänder 5 und 6 sowie die Befestigungslaschen 3 und 4 weisen zusätzlich Belüftungslöcher 13 auf, um eine Beschädigung des Holzes durch Feuchtigkeit unter den Teilen der Verbindungselemente zu vermeiden oder zu verringern. Die Holzverbindungselemente sind derart ausgestaltet, daß die Kante 20 der jeweiligen Befestigungslasche mit der Kante 21 des jeweiligen äußeren Ringbundes fluchtet. Dadurch entstehen hervorstehenden Kanten und Ecken.

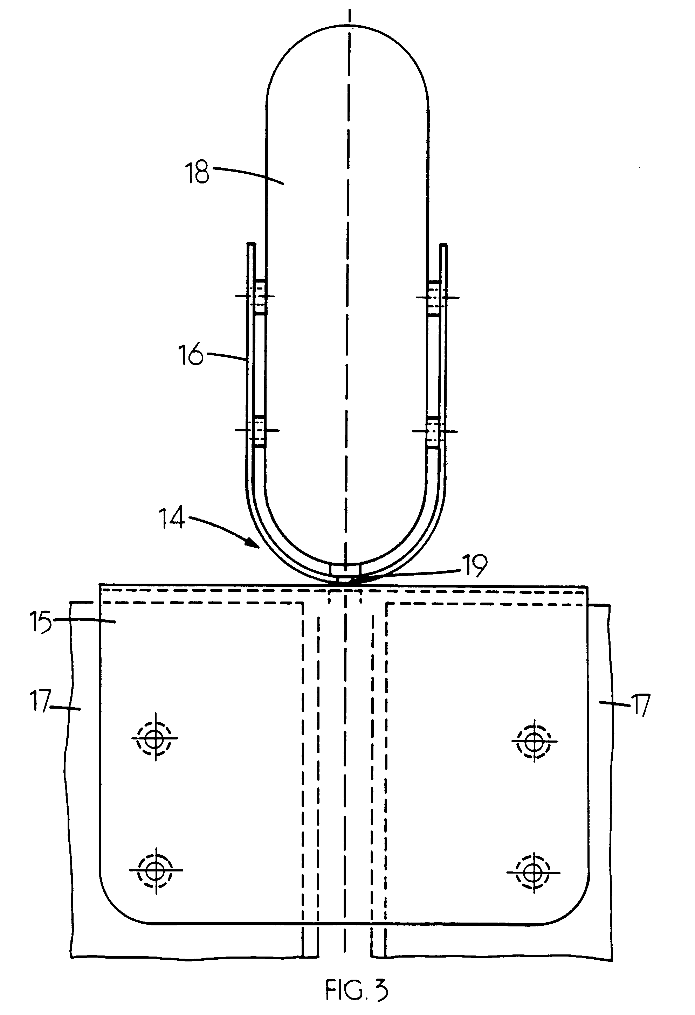

Figur 3 zeigt das zweite Holzverbindungselement 14 mit den U-förmig ausgebildeten Halteteilen 15 und 16. Bei dem in Figur 3 dargestellten Ausführungsbeispiel sind die Seiten des unteren Halteteils so breit ausgeführt, daß sie zwei Holzbalken 17 überlappen und zur Befestigung derselben dienen. In den Anwendungsfällen, wo der Holzbalken 18 nur auf einem Holzbalken 17 aufliegt, können die Seiten des Halteteils schmäler ausgeführt sein. Wie aus der Figur ersichtlich, sind die Holzbalken 17 bzw. 18 in den jeweiligen Halteteilen 15 bzw. 16 mit Abstand, beispielsweise durch entsprechende Schraubverbindungen und Unterlagsscheiben, gehalten, so daß Feuchtigkeit nicht zu einer Beschädigung des Holzes führen kann. Die beiden Halteteile 15 und 16 sind über einen Bolzen 19, um den sich beide Halteteile um 360° drehen können, aneinander befestigt. Durch diese Ausgestaltung können die Hauptträger 17 und die Querträger 18 in einem beliebigen Winkel zueinander angeordnet werden.

Die einzelnen Holzverbindungselemente sind aus Edelstahl ausgebildet, so daß eine weitere Pflege und Behandlung nicht erforderlich ist.

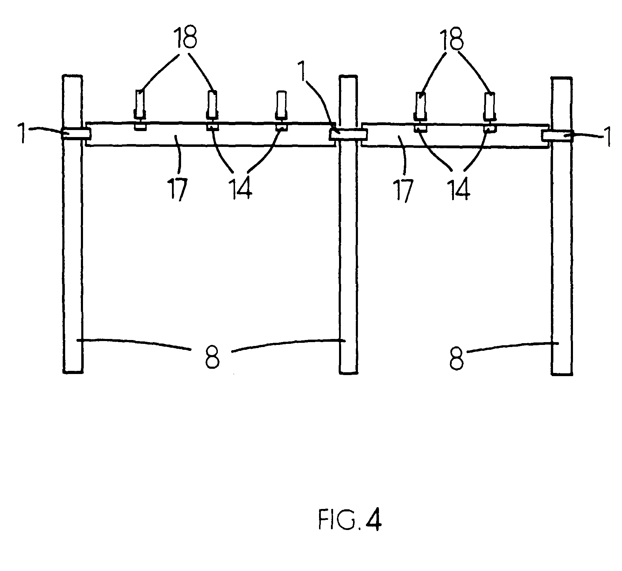

Figur 4 zeigt zur Vervollständigung schematisch einen Holzbau mit drei Pfosten 8, die aus Holz oder auch Beton gefertigt sein können. Am oberen Ende sind an den Pfosten 8 erste Holzverbindungselemente 1 angeordnet, wobei bei dem mittleren Pfosten zwei erste Verbindungselemente, wie in der Figur 2 näher gezeigt, angebracht sind. Die ersten Verbindungselemente tragen als Hauptträger wirkende Holzbalken 17 auf denen mittels zwei Holzverbindungselementen 14 als Nebenträger wirkende Holzbalken 18 befestigt sind. Die Winkel zwischen den einzelnen Holzbalken 17 und 18 können dabei durch die erfindungsgemäßen Verbindungselemente je nach Bedarf eingestellt werden.

## Patentansprüche

1. Holzverbindungssystem für Holzbauten, wie Pergolen, offene Garagen, Haltestellen und dergleichen, mit einem ersten Verbindungselement (1, 2) zwischen einem vertikalen Pfosten (8) und einem horizontalen Holzbalken (7), das den Pfosten (8) mittels mindestens einem Ringband (5, 6) ringförmig umgreift und über Befestigungslaschen (3, 4) an dem Holzbalken (7) befestigbar ist, wobei das erste Verbindungselement (1, 2) zwei oder mehrere zueinander beabstandete und an einer Seite offene Ringbänder (5, 6), deren Innendurchmesser im wesentlichen dem Außendurchmesser des Pfostens und deren Abstand zueinander mindestens der Breite der Ringbänder entspricht, zwei Befestigungslaschen (3, 4) für den Holzbalken (7), die an den offenen Enden der Ringbänder (5, 6) angeformt sind und breiter sind als die lichte Weite der Ringbänder, und Befestigungsmittel (9) in den Befestigungslaschen (3, 4) für den Holzbalken (7) aufweist, die verdrehsymmetrisch zur Längsachse (11) des Verbindungselements angeordnet sind, so daß bei einer Drehung des Verbindungselements um 180° die Lage der Befestigungspunkte sich nicht verändert, und einem zweiten Verbindungselement (14) zwischen im wesentlichen horizontal verlaufenden Holzbalken (15, 16, 17) mit zwei U-förmig ausgebildeten Halteteilen (17, 18), die an ihren geschlossenen Stirnseiten um die Längsachse drehbar gelagert miteinander verbunden sind.

2. Holzverbindungssystem nach Anspruch 1, **dadurch gekennzeichnet**, daß die Befestigungslaschen (3, 4) einen Anschlag (10) für den Holzbalken (7) als Montagehilfe aufweisen.

3. Holzverbindungssystem nach Anspruch 2, **dadurch gekennzeichnet**, daß die Ringbandfläche und/oder die Befestigungslaschen Belüftungslöcher (13) für die Belüftung des Holzes aufweist.

4. Holzverbindungssystem nach einem der vorangegangenen Ansprüche, **dadurch gekennzeichnet**, daß die Verbindung der Halteteile (15, 16) des zweiten Holzverbindungselements (14) über eine Welle (19) erfolgt, an der die Halteteile um 360° drehbar befestigt sind.

5. Holzverbindungssystem nach einem der vorangegangenen Ansprüche, **dadurch gekennzeichnet**, daß bei dem zweiten Verbindungselement (14) die Holzbalken mit Abstand zu dem Halteteil (15, 16) angeordnet sind.

6. Holzverbindungselement zwischen einem Pfosten und senkrecht dazu angeordneten Holzbalken, mit zwei oder mehreren an einer Seite offene Ringbänder (5, 6),die mit Abstand zueinander angeordnet sind, wobei der Abstand mindestens der Breite der Ringbänder (5, 6) und der Innendurchmesser im wesentlichen dem Außendurchmesser des Pfostens (8) entspricht,
zwei Befestigungslaschen (3, 4) für den Holzbalken (7), die an den offenen Enden der Ringbänder (5, 6) angeformt sind und an denen der Holzbalken (7) befestigbar ist, wobei die Befestigungslaschen (3, 4) breiter sind als die lichte Weite der Ringbänder (5, 6), und jeweils einen Anschlag (10) für den Holzbalken (7) als Montagehilfe aufweist
und Befestigungsmittel (9) in den Befestigungslaschen (3, 4) für den Holzbalken (7), die verdrehsymmetrisch für eine Drehung des Verbindungselements um 180° um seine Längsachse (11) angeordnet sind, so daß sich bei einer Drehung die Lage der Befestigungsmittel relativ zum Holzbalken (7) nicht ändert.

7. Holzverbindungselement nach Anspruch 6, **dadurch gekennzeichnet**, daß die Befestigungslaschen (3, 4) eine dem Ring zugewandte Kante (12) aufweisen, die im wesentlichen parallel zu dem Pfosten (8) verläuft und sich beim Verkanten gegen den Pfosten abstützt.

8. Holzverbindungselement nach Anspruch 6 oder 7, **dadurch gekennzeichnet**, daß die Befestigungslaschen (3, 4) im wesentlichen rechteckförmig ausgebildet sind, wobei eine Kante (20) mit einer Kante (21) des äußeren Ringbandes fluchtet.

9. Holzverbindungselement nach einem der vorangegangenen Ansprüche 6 bis 8, **dadurch gekennzeichnet**, daß die Ringbandfläche und/oder die Haltelaschen Löcher (13) für die Belüftung des Holzes aufweist.

10. Holzverbindungselement nach einem der vorangegangenen Ansprüche 6 bis 9, **dadurch gekennzeichnet**, daß es aus Edelstahl hergestellt ist.

## Claims

1. A wood joining system for wooden structures such as pergolas, open garages, stations and the like, with a first joining element (1, 2) between a vertical post (8) and a horizontal wooden beam (7), which extends around the post (8) in a ring pattern by means of at least one ring belt (5, 6) and can be secured to the wooden beam (7) by fastening straps (3, 4), where the first joining element (1, 2) has two or more ring belts (5, 6) which are arranged with a distance between them and are open on one side, and their inside diameter corresponds essentially to the outside diameter of the post, and their spacing from one another corresponds at least to the width of the ring belts, and it also has two fastening straps (3, 4) for the wooden beam (7) which are integrally molded on the open ends of the ring belts (5, 6) and are wider than the inside diameter of the ring belts, and it has fastening means (9) in the fastening straps (3, 4) for the wooden beam (7), which are arranged with rotational symmetry to the longitudinal axis (11) of the joining element, so that with rotation of the joining element by 180° the position of the fastening points does not change, and with a second joining element (14) between essentially horizontal wooden beams (15, 16, 17) with two U-shaped mounting parts (17, 18) which are joined together on their closed end faces so they can rotate about the longitudinal axis.

2. A wood joining system according to claim 1, characterized in that the fastening straps (3, 4) have a stop (10) for the wooden beam (7) as an assembly aid.

3. A wood joining system according to claim 2, characterized in that the ring belt surface and/or the fastening straps have vent holes (13) for ventilating the wood.

4. A wood joining system according to one of the preceding claims, characterized in that the mounting parts (15, 16) of the second wood joining element (14) are joined by a shaft (19) on which the mounting parts are attached so they can rotate 360°.

5. A wood joining system according to one of the preceding claims, characterized in that in the second joining element (14) the wooden beams are arranged at a distance from the mounting part (15, 16).

6. A wood joining element between a post and wooden beams arranged perpendicular thereto, with two or more ring belts (5, 6) that are open on one side and are arranged at a distance from one another, where the distance corresponds at least to the width of the ring belts (5, 6), and the inside diameter corresponds essentially to the outside diameter of the post (8);
two fastening straps (3, 4) for the wooden beam (7) which are integrally molded on the open ends of the ring belts (5, 6) and to which the wooden beam (7) can be attached, where the fastening straps (3, 4) are wider than the inside diameter of the ring belts (5, 6) and each has a stop (10) for the wooden beam (7) as an assembly aid;
and fastening means (9) in the fastening straps (3, 4) for the wooden beam (7) which are arranged with rotational symmetry for rotation of the joining element 180° about its longitudinal axis (11), so that the position of the fastening means relative to the wooden beam (7) does not change during rotation.

7. A wood joining element according to claim 6, characterized in that the fastening straps (3, 4) have an edge (12) facing the ring and running essentially parallel to the post (8), supported against the post in tilting.

8. A wood joining element according to claim 6 or 7, characterized in that the fastening straps (3, 4) are designed essentially rectangular, with one edge (20) being flush with one edge (21) of the outer ring belt.

9. A wood joining element according to one of the preceding claims 6 through 8, characterized in that the ring belt surface and/or the mounting straps have holes (13) for ventilation of the wood.

10. A wood joining element according to one of the preceding claims 6 through 9, characterized in that it is manufactured from high-grade steel.

## Revendications

1. Système de liaison de pièces en bois, pour constructions en bois telles que pergolas, garages ouverts, arrêts et similaires, comprenant un premier élément de liaison (1, 2) placé entre un piquet vertical (8) et une poutre de bois horizontale (7), et qui ceinture, en anneau, le piquet (8) à l'aide d'au moins une bande annulaire (5, 6) et qui peut être fixé à la poutre de bois (7) par l'intermédiaire de pattes de fixation (3, 4), système dans lequel le premier élément de liaison (1, 2) présente deux bandes annulaires (5, 6) ou plus, espacées l'une de l'autre et ouvertes d'un côté, dont le diamètre intérieur correspond sensiblement au diamètre extérieur du piquet, et leur espacement l'une de l'autre, au moins à la largeur des bandes annulaires, deux pattes de fixation (3, 4) pour la poutre de bois (7), qui sont préformées aux extrémités ouvertes des bandes circulaires (5, 6) et plus larges que la largeur intérieure des bandes annulaires, et des moyens de fixation (9) prévus dans les pattes de fixation (3, 4) pour la poutre de bois (7), qui sont agencés avec une symétrie de révolution par rapport à l'axe longitudinal (11) de l'élément de liaison, si bien qu'en cas de rotation de l'élément de liaison de 180°, la position des points de fixation ne change pas, et un second élément de liaison (14) placé entre des poutres de bois (15, 16, 17) d'orientation sensiblement horizontale, et présentant deux pièces d'arrêt (17, 18) en forme de U, qui sont reliées l'une à l'autre à leux extrémités frontales fermées, de façon à pouvoir tourner autour de l'axe longitudinal.

2. Système de liaison de pièces en bois selon la revendication 1, caractérisé en ce que les pattes de fixation (3, 4) présentent une butée (10) pour la poutre de bois (7), comme aide pour le montage.

3. Système de liaison de pièces en bois selon la revendication 2, caractérisé en ce que la surface des bandes annulaires et/ou les pattes de fixation présentent des trous d'aération (13) pour l'aération du bois.

4. Système de liaison de pièces en bois selon l'une des revendications qui précèdent, caractérisé en ce que la liaison des pièces d'arrêt (15, 16) du second élément de liaison de pièces en bois (14) se fait grâce à un axe (19) auquel les pièces d'arrêt sont assemblées de façon à pouvoir tourner de 360°.

5. Système de liaison de pièces en bois selon l'une des revendications qui précèdent, caractérisé en ce que pour ce qui est du second élément de liaison (14), les poutres de bois sont placées à distance par rapport à la pièce d'arrêt (15, 16).

6. Elément de liaison de pièces en bois entre un piquet et des poutres de bois disposées perpendiculairement à celui-ci, comprenant deux bandes annulaires (5, 6) ou plus, ouvertes d'un côté, qui sont placées à distance les unes des autres, cette distance correspondant au moins à la largeur des bandes annulaires (5, 6) et le diamètre intérieur correspondant sensiblement au diamètre extérieur du piquet (8), deux pattes de fixation (3, 4) pour la poutre de bois (7), qui sont préformées aux extrémités ouvertes des bandes annulaires (5, 6) et auxquelles la poutre de bois (7) peut être fixée, les pattes de fixation (3, 4) étant plus larges que la largeur intérieure des bandes annulaires (5, 6) et présentant chacune une butée (10) pour la poutre de bois (7), comme aide pour le montage, et des moyens de fixation (9) prévus dans les pattes de fixation (3, 4) pour la poutre de bois (7), qui sont agencés avec une symétrie de révolution en vue d' une rotation de l'élément de liaison de 180° autour de son axe longitudinal (11), de sorte qu'en cas de rotation, la position des moyens de fixation par rapport à la poutre de bois (7) ne change pas.

7. Elément de liaison de pièces en bois selon la revendication 6, caractérisé en ce que les pattes de fixation (3, 4) présentent un bord (12) dirigé vers l'anneau, bord qui est sensiblement parallèle au piquet (8) et qui prend appui contre le piquet lors du coincement.

8. Elément de liaison de pièces en bois selon la revendication 6 ou 7, caractérisé en ce que les pattes de fixation (3, 4) ont une forme sensiblement rectangulaire, un bord (20) étant aligné sur un bord (21) de la bande annulaire extérieure.

9. Elément de liaison de pièces en bois selon l'une des revendications précédentes 6 à 8, caractérisé en ce que la surface de la bande annulaire et/ou les pattes de fixation présentent des trous (13) pour l'aération du bois.

10. Elément de liaison de pièces en bois selon l'une des revendications précédentes 6 à 9, caractérisé en ce qu'il est fabriqué en acier fin.
